# FASCICULE DE BREVET EUROPEEN

(11) **EP 1 541 970 B1**
(45) Date de publication et mention de la délivrance du brevet: **09.04.2008**
(21) Numéro de dépôt: 04292888.7
(22) Date de dépôt: 06.12.2004
(51) Int. Cl.: G01C 25/00

(54) **Procédé de compensation d'une anisotropie dans un capteur de rotation inertiel à cloche vibrante**
Verfahren zur Kompensation einer Anisotropie in einem Inertialdrehwinkelsensor mit einer schwingenden Glocke
Method for compensating anisotropy in a vibrating bell inertial rotation sensor

(30) Priorité: 11.12.2003 FR 0314514
(43) Date de publication de la demande: 15.06.2005
(73) Titulaire: Sagem Défense Sécurité, 75015 Paris (FR)
(72) Inventeur: Caron, Jean-Michel, 95210 Saint-Gratien (FR); Ragot, Vincent, 92600 Asnieres (FR); Renault, Alain, 95300 Pontoise (FR); Jeanroy, Alain, 78700 Conflans Saint-Honorine (FR)
(74) Mandataire: Fruchard, Guy

(56) Documents cités:
- FR-A- 2 784 180
- FR-A- 2 821 422

## Description

La présente invention concerne un procédé de compensation d'anisotropie dans un capteur de rotation inertiel à cloche vibrante.

### ARRIERE PLAN DE L'INVENTION

On connaît, notamment du document FR-A-2 784 180, des capteurs de rotation inertiels comprenant une cloche vibrante, généralement une cloche hémisphérique, dont la surface est métallisée pour recevoir une tension de polarisation, la cloche ayant un bord en regard duquel s'étendent des électrodes portées par un socle. Les électrodes sont divisées en électrodes de commande et en électrodes de détection. Des signaux de commande sont appliqués aux électrodes de commande de façon à provoquer dans la cloche vibrante des vibrations entraînant des déformations de la cloche dont l'orientation est sensible à une rotation du capteur. Les électrodes de détection servent à mesurer l'orientation des déformations de la cloche et en déduire par un traitement approprié les mouvements de rotation du capteur. Les déplacements du résonateur par rapport au socle porte-électrodes aux deux extrémités d'un diamètre sont égaux en modules et en signes lorsqu'ils résultent des commandes d'entretien de la vibration, et ils sont égaux en modules mais de signes opposés lorsqu'ils résultent de déplacements parasites de la cloche, en particulier une flexion de l'axe de la cloche. La somme des mesures effectuées sur un même diamètre permet d'éliminer les déplacements parasites à condition que les gains de détection soient égaux.

On sait par ailleurs que le gain pour chaque électrode est fonction d'une part de la surface d'électrode et d'autre part de la valeur de l'entrefer entre l'électrode et le bord en regard de la cloche vibrante. En dépit de tolérances de fabrication très strictes, il existe entre les électrodes des différences de surface ou d'entrefer provoquant des écarts de gain entre les électrodes, que celles-ci soient des électrodes de commande ou des électrodes de détection. En outre, dans les systèmes existants, chaque électrode est reliée à une chaîne de traitement et les différentes chaînes de traitement peuvent également présenter entre elles des écarts de gain. Il en résulte d'une façon générale une anisotropie tant de la commande que de la détection, même dans le cas où comme dans le document précité les signaux de commande et de détection sont traités par multiplexage/démultiplexage. Cette anisotropie est une source d'erreur dans le calcul des mouvements de rotation du capteur.

### OBJET DE L'INVENTION

Un but de l'invention est de proposer un procédé permettant de minimiser les conséquences de l'anisotropie dans un capteur de rotation inertiel à cloche vibrante.

### BREVE DESCRIPTION DE L'INVENTION

En vue de la réalisation de ce but on propose selon l'invention un procédé de compensation d'une anisotropie de gain d'électrode dans un capteur de rotation inertiel comportant une cloche vibrante métallisée à laquelle est appliquée une tension de polarisation, la cloche vibrante ayant un bord en regard duquel s'étendent des électrodes de commande et des électrodes de détection portées par un socle, le procédé comportant les étapes de mesurer une différence de gain entre les électrodes de détection et d'appliquer une fraction de la tension de polarisation à au moins une des électrodes de détection en fonction d'une différence de gain mesurée entre les électrodes de détection pour compenser cette différence de gain.

Ainsi, par une application d'une fraction de la tension de polarisation à certaines électrodes, le gain de ces électrodes est modifié et il est donc possible d'équilibrer le gain entre les électrodes concernées et donc d'éliminer les erreurs de calcul résultant des différences de gain. En outre, par une seule mesure, on compense toutes les irrégularités résultant des différentes composantes du gain (entrefer, surface des électrodes...) .

Selon un mode de mise en oeuvre préféré de l'invention, la différence de gain entre les électrodes est mesurée par multiplexage au moyen d'une chaîne de traitement unique pour un groupe d'électrodes. Ainsi, pour ce groupe d'électrodes, on élimine non seulement les erreurs provenant de l'anisotropie de structure du capteur, mais également la composante d'anisotropie provenant du traitement du signal.

### BREVE DESCRIPTION DES DESSINS

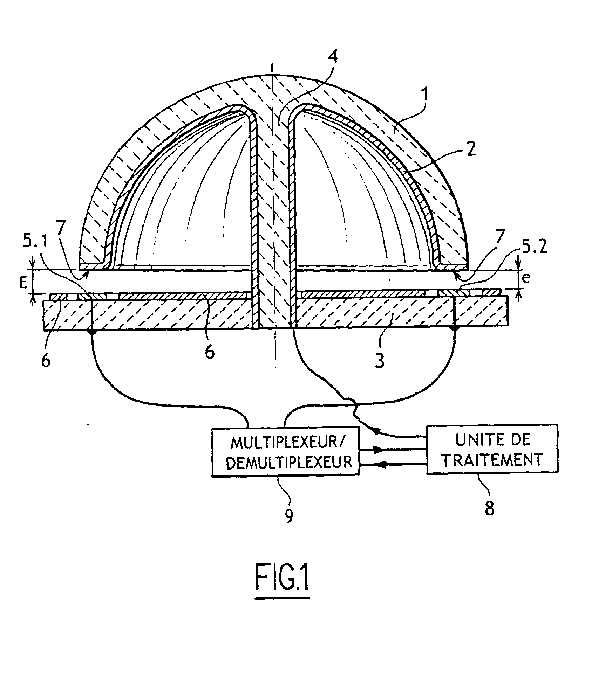

D'autres caractéristiques et avantages de l'invention apparaîtront à la lecture de la description qui suit de modes de mise en oeuvre particuliers non limitatifs de l'invention en relation avec la figure unique ci-jointe qui illustre de façon schématique le circuit de traitement selon l'invention associé à un capteur illustré selon une coupe par un plan axial.

### DESCRIPTION DETAILLEE DE L'INVENTION

En référence à la figure, le procédé de compensation selon l'invention s'applique à un capteur de rotation inertiel comportant de façon connue en soi une cloche vibrante 1, ici une cloche hémisphérique réalisée en silice et fixée par une tige 4 à un socle 3. La surface interne de la cloche 1 ainsi que la face extrême 7 du bord de la cloche et la tige 4 sont recouverts d'une couche de métal 2 reliée à une unité de traitement 8 pour recevoir une tension de polarisation continue. Le socle 3 porte une électrode de garde 6 ainsi que des électrodes de commande et des électrodes de détection, en général huit au total, s'étendant en regard du bord 7 de la cloche 1 et régulièrement réparties autour de l'axe de la cloche 1. La figure représente seulement deux électrodes 5.1 et 5.2 diamétralement opposées. Celles-ci peuvent indifféremment être des électrodes de commande ou des électrodes de détection. Sur la figure, la distance entre les électrodes et le bord 7 de la cloche a volontairement été exagérée pour mieux illustrer la différence de dimension de l'entrefer E entre l'électrode 5.1 et le bord 7 de la cloche par comparaison avec l'entrefer e entre l'électrode 5.2 et le bord 7 de la cloche.

Selon un mode de mise en oeuvre préféré de l'invention, les électrodes sont reliées à un multiplexeur/démultiplexeur 9 lui-même relié à l'unité de traitement 8.

Dans une première mise en oeuvre du procédé selon l'invention, l'unité de traitement assure tout d'abord, par l'intermédiaire du multiplexeur/démultiplexeur 9, une mesure du gain pour chacune des électrodes et détermine l'électrode à laquelle correspond le gain le plus faible et l'électrode à laquelle correspond le gain le plus fort. Un calcul est ensuite effectué dans l'unité de traitement 8 pour déterminer la fraction de tension de polarisation qu'il est nécessaire d'appliquer à l'électrode de gain le plus fort pour ramener ce gain à la valeur du gain le plus faible. Pour chacune des autres électrodes, un calcul semblable est effectué pour déterminer, à partir de la fraction de tension de polarisation appliquée à l'électrode de gain le plus fort, une fraction de tension de polarisation de même signe et ayant une valeur en fonction inverse de la différence de gain par rapport à l'électrode de gain le plus faible de sorte que toutes les électrodes sont ainsi ramenées au même gain.

Selon un autre mode de mise en oeuvre de l'invention on peut également comparer le gain entre deux électrodes diamétralement opposées et appliquer à ces électrodes des fractions de tension de polarisation de mêmes valeurs et ayant des signes opposés de sorte que le gain est cette fois équilibré pour chaque paire d'électrodes diamétralement opposée indépendamment des corrections de gain sur les paires adjacentes.

Bien entendu, l'invention n'est pas limitée aux modes de réalisation décrits et on peut y apporter des variantes de réalisation sans sortir du cadre de l'invention tel que défini par les revendications.

En particulier, bien que l'invention ait été décrite en relation avec une unité de traitement unique, on peut mettre en oeuvre le procédé selon l'invention en relation avec les systèmes de traitement conventionnels comportant une chaîne de traitement associée à chaque électrode. Dans ce cas, les gains peuvent être mesurés simultanément pour chacune des électrodes et une comparaison est effectuée entre les gains mesurés par les différentes chaînes de traitement pour déterminer les fractions de tension de polarisation à appliquer à chacune des électrodes, ce qui permet de corriger les erreurs dues à l'anisotropie structurelle du capteur.

Bien que l'invention ait été décrite en relation avec un capteur comportant des électrodes qui s'étendent en regard de la face extrême du bord de la cloche, le procédé selon l'invention peut également être appliqué à un capteur dont les électrodes s'étendent en regard de la face latérale de la cloche le long du bord de celle-ci.

On notera également que le procédé selon l'invention peut être appliqué soit en atelier avec une simple mémorisation, dans une unité de commande du capteur, des fractions de tension de polarisation à appliquer à chacune des électrodes, soit être incorporé à l'unité de commande du capteur pour une mise en oeuvre lors de l'initialisation du capteur préalablement à son utilisation. Dans le cas d'une mise en oeuvre en atelier, on peut réaliser une correction simplifiée en mesurant seulement l'une des composantes d'anisotropie, par exemple les différences entre les entrefers, par des moyens mécaniques ou optiques et assurer seulement la compensation de l'anisotropie de cette composante.

Bien que l'invention ait été décrite avec une chaîne de traitement unique assurant une compensation de gain sur l'ensemble des électrodes, on peut également réaliser une compensation seulement sur les électrodes de détection ou encore une compensation sur les électrodes de détection au moyen d'une première chaîne de traitement associée aux électrodes de détection et une compensation séparée sur les électrodes de commande au moyen d'une seconde chaîne de traitement associée aux électrodes de commande.

## Revendications

1. Procédé de compensation d'une anisotropie de gain d'électrode dans un capteur de rotation inertiel comportant une cloche vibrante métallisée (1) à laquelle est appliquée une tension de polarisation, la cloche vibrante ayant un bord (7) en regard duquel s'étendent des électrodes de commande et des électrodes de détection (5.1, 5.2) portées par un socle (3), **caractérisé en ce qu'**il comporte les étapes de mesurer une différence de gain entre les électrodes de détection et d'appliquer une fraction de la tension de polarisation à au moins une des électrodes de détection en fonction d'une différence de gain mesurée entre les électrodes de détection pour compenser cette différence de gain.

2. Procédé selon la revendication 1, **caractérisé en ce qu'**il comporte les étapes de mesurer le gain de toutes les électrodes, d'appliquer à une électrode de gain le plus fort une fraction de tension de polarisation nécessaire pour équilibrer le gain avec une électrode de gain le plus faible et appliquer aux autres électrodes une fraction de tension de polarisation de même signe ayant une valeur en fonction inverse de la différence de gain par rapport à l'électrode de gain le plus faible.

3. Procédé selon la revendication 1, **caractérisé en ce qu'**il comporte les étapes de comparer le gain entre des électrodes (5.1, 5.2) diamétralement opposées et appliquer à ces électrodes des fractions de tension de polarisation de mêmes valeurs et ayant des signes opposés.

4. Procédé selon la revendication 1, **caractérisé en ce que** la différence de gain entre les électrodes est mesurée par multiplexage au moyen d'une chaîne à traitement unique pour un groupe d'électrodes.

## Claims

1. A method of compensating electrode gain anisotropy in an inertial rotation sensor comprising a metallized vibrating bell (1) having a bias voltage applied thereto, the vibrating bell having an edge (7) facing control electrodes and detection electrodes (5.1, 5.2) carried by a stand (3), the method being **characterized in that** it comprises the steps of measuring a gain difference between the detection electrodes, and applying a fraction of the bias voltage to said electrodes as a function of a difference measured between the detection electrodes for compensating said gain difference.

2. A method according to claim 1, **characterized in that** it includes the steps of measuring the gains of all of the electrodes, applying to an electrode having the highest gain a bias voltage fraction necessary for balancing its gain with the electrode having the lowest gain, and applying to the other electrodes respective bias voltage fractions of the same sign and of magnitudes that vary inversely with their gain differences relative to the electrode having the lowest gain.

3. A method according to claim 1, **characterized in that** it includes the steps of comparing gain between electrodes (5.1, 5.2) that are diametrically-opposite, and applying to said electrodes bias voltage fractions of the same magnitude and of opposite signs.

4. A method according to claim 1, **characterized in that** the gain difference between the electrodes is measured by multiplexing by means of a single processor system for a group of electrodes.

## Patentansprüche

1. Verfahren zum Ausgleich einer Anisotropie einer Verstärkung einer Elektrode in einem Inertial-Drehwinkelsensor, der eine metallisierte schwingende Glocke (1) umfasst, an der eine Polarisationsspannung angelegt wird, wobei die schwingende Glocke einen Rand (7) hat, gegenüber dem sich Steuerelektroden und Detektionselektroden (5.1, 5.2) erstrecken, die von einem Sockel (3) getragen werden, **dadurch gekennzeichnet, dass** es die Schritte umfasst: Messen einer Verstärkungsdifferenz zwischen den Detektionselektroden und Anlegen eines Teils der Polarisationsspannung an mindestens einer der Detektionselektroden in Abhängigkeit einer zwischen den Detektionselektroden gemessenen Verstärkungsdifferenz, um diese Verstärkungsdifferenz auszugleichen.

2. Verfahren nach Anspruch 1, **dadurch gekennzeichnet, dass** es die Schritte umfasst: es wird die Verstärkung aller Elektroden gemessen; an eine Elektrode mit der größten Verstärkung wird ein Teil der Polarisationsspannung angelegt, die notwendig ist, um die Verstärkung mit einer Elektrode mit der geringsten Verstärkung in Übereinstimmung zu bringen; an den anderen Elektroden wird ein Teil der Polarisationsspannung mit gleichem Vorzeichen angelegt, deren Wert in einer inversen Beziehung zu der Verstärkungsdifferenz in Bezug auf die Elektrode mit der geringsten Verstärkung steht.

3. Verfahren nach Anspruch 1, **dadurch gekennzeichnet, dass** es die Schritte umfasst: Vergleichen der Verstärkung zwischen den diametral gegenvon Teilen einer Polarisationsspannung mit gleichen Werten und entgegengesetzten Vorzeichen.

4. Verfahren nach Anspruch 1, **dadurch gekennzeichnet, dass** die Verstärkungsdifferenz zwischen den Elektroden durch Multiplexierung mittels einer einzigen Verarbeitungskette für eine Gruppe von Elektroden gemessen wird.
